# FASCICULE DE BREVET EUROPEEN

(11) **EP 1 713 086 B1**
(45) Date de publication et mention de la délivrance du brevet: **25.03.2009**
(21) Numéro de dépôt: 06012599.4
(22) Date de dépôt: 27.11.2001
(51) Int. Cl.: G21C 3/62, G21C 3/64, G21C 21/02

(54) **Pastille de combustible nucléaire oxyde et procédé de réalisation correspondant**
Oxid-Kernbrennstoff-Pellet und entsprechendes Umsetzungsverfahren
Oxide nuclear fuel pellet and corresponding manufacturing process

(30) Priorité: 30.11.2000 FR 0015506
(43) Date de publication de la demande: 18.10.2006
(62) Demande divisionnaire de: 01998976.3
(73) Titulaire: Areva NP, 92400 Courbevoie (FR)
(72) Inventeur: Delafoy, Christine, 69004 Lyon (FR); Deydier, Pascal, 69740 Genas (FR)
(74) Mandataire: Domenego, Bertrand

(56) Documents cités:
- EP-A- 0 249 549
- FR-A- 1 198 870
- FR-E- 74 437
- FR-E- 75 023
- FR-E- 75 044
- GB-A- 2 107 691
- PATENT ABSTRACTS OF JAPAN vol. 1997, no. 09, 30 septembre 1997 (1997-09-30) & JP 09 127279 A (NUCLEAR FUEL IND LTD), 16 mai 1997 (1997-05-16)
- PATENT ABSTRACTS OF JAPAN vol. 017, no. 076 (P-1487), 16 février 1993 (1993-02-16) & JP 04 279895 A (NIPPON NUCLEAR FUEL DEV CO LTD), 5 octobre 1992 (1992-10-05)
- PATENT ABSTRACTS OF JAPAN vol. 015, no. 230 (P-1214), 12 juin 1991 (1991-06-12) & JP 03 068898 A (NIPPON NUCLEAR FUEL DEV CO LTD), 25 mars 1991 (1991-03-25)

## Description

L'invention concerne le combustible nucléaire utilisé dans les réacteurs refroidis et modérés par de l'eau.

Le combustible nucléaire se présente dans de tels réacteurs sous forme de pastilles frittées de forme approximativement cylindrique, à base d'oxyde d'uranium enrichi en isotope 235 et/ou en plutonium. Le combustible peut comporter également un poison neutronique et/ou un faible pourcentage de métaux ou oxydes destinés à provoquer un grossissement des grains lors du frittage et à augmenter la rétention des gaz de fission (WO-A-94 29874). Le combustible est utilisé sous forme d'empilement de pastilles dans des gaines en alliage à base de zirconium pour constituer des crayons ou éléments combustibles. Ces crayons sont montés dans un squelette pour constituer un assemblage combustible. En général ce squelette est constitué de deux embouts reliés par des tubes qui portent des grilles de maintien des crayons aux noeuds d'un réseau régulier. Des assemblages de ce type sont décrits par exemple dans les brevets US 5 844 958 et 4 804 516 auxquels on pourra se reporter.

Un impératif dans la conception des pastilles et des crayons est la sûreté. Pour des raisons économiques, on cherche à allonger le plus possible la durée de séjour des crayons de combustible en réacteur et à réduire le coût de fabrication des pastilles. Un facteur important limitant la flexibilité d'exploitation du réacteur est l'augmentation du risque de rupture de gaine par la sollicitation mécanique provoquée par l'interaction pastilles-gaine, désignée par l'abréviation IPG,

A ce jour, on a adopté de façon quasi universelle des pastilles quasi-cylindriques ayant une hauteur supérieure à leur diamètre. A titre d'exemple, on utilise largement à l'heure actuelle des pastilles ayant un diamètre D d'environ 8,2 mm et une hauteur H de 13,4 mm, qui correspond à un rapport H/D de 1,6 environ. Un jeu diamétral relativement important, de l'ordre de 170 µm, est prévu entre les pastilles et la gaine, pour réduire l'lPG, et des évidements sont ménagés dans les faces d'extrémité des pastilles et ces faces terminales présentent un chanfrein.

On a également proposé (JP-A-54 07 4985) des crayons de combustible nucléaire dont les pastilles et la gaine sont dimensionnées de façon à ce que les pastilles aient un rapport hauteur/diamètre inférieur à 0,7 et simultanément que la diagonale de la pastille soit inférieure à la somme du diamètre et du jeu radial, ce qui se traduit par un jeu radial important, qui est un obstacle aux transferts thermiques.

L'invention vise notamment à fournir des crayons contenant un empilement de pastilles de combustible nucléaire répondant mieux aux exigences de la pratique que ceux antérieurement connus, notamment en ce que lés contraintes circonférentielles dues à l'lPG sont considérablement réduites, même pour une même valeur du jeu diamétral initial entre les pastilles et la gaine.

Dans ce but, l'invention propose notamment un crayon de combustible nucléaire comprenant une gaine en alliage à base de zirconium et un empilement de pastilles de combustible nucléaire dont le rapport H/D entre la hauteur et le diamètre est compris entre 0,4 et 0,6, de préférence d'environ 0,5, le jeu diamétral initial entre les pastilles et la gaine ne dépassant pas 200 µm.

On ne dépassera pas 200 µm car on dégraderait les transferts thermiques, particulièrement en début d'irradiation , et on aurait une augmentation du relâchement des gaz de fission.

Le jeu minimal admissible peut être plus faible que dans le cas de pastilles "longues" du fait du gain que procurent les pastilles "courtes" en contrainte de la gaine. En tenant compte des tolérances inévitables, on peut estimer qu'un jeu nominal de 135 µm constitue un minimum.

Il a été constaté qu'un tel crayon permet de réduire de façon très considérable les contraintes circonférentielles dans la gaine pour les puissances élevées.

Une étude systématique a montré que les contraintes circonférentielles, toutes choses étant égales par ailleurs, continuent à diminuer pour des rapports H/D inférieurs à 0,4 et que le gain en contrainte de Tresca (contrainte circonférentielle moins contrainte radiale) continue à augmenter. Mais des difficultés de mise en oeuvre industrielle sont à prévoir lorsque le rapport H/D est inférieur à 0,4.

Au moins dans les réacteurs à eau sous pression, les pastilles présentent des évidements, en général en forme de calotte sphérique, pour compenser les effets de dilatation différentielle apparaissant sur le rayon de la pastille lors de transitoires.

Les diamètres des évidements des faces d'extrémité pourraient rester les mêmes que ceux des pastilles "longues". Le diamètre de l'évidement doit laisser subsister une surface de contact suffisante entre deux pastilles empilées. Pour une pastille de 8,192 mm de diamètre, on pourra utiliser un diamètre d'évidement de 4,72 mm, lorsque la pastille présente un chanfrein sur une largeur de 0,42 mm. Une réduction de la profondeur des évidements en proportion stricte de la réduction de hauteur n'est pas favorable pour les rapports H/D entre 0,4 et 0,6. Il sera avantageux d'accroître la profondeur pour un rapport H/D entre 0,4 et 0,6.

Dans certains cas, on pourra même se dispenser de rectifier la pastille, ce qui représente un avantage économique important, notamment par la suppression des boues de rectification et la simplification de la fabrication.

Le jeu initial, ne dépassant pas 200 µm, tient compte des transferts thermiques entre les pastilles et la gaine. Le diamètre nominal initial des pastilles peut être celui couramment prévu à l'heure actuelle, de l'ordre de 8,192mm. Un jeu initial faible peut être admis si les pastilles sont rectifiées, ce qui réduit la dispersion entre les diamètres moyens de différentes pastilles et l'écart entre les diamètres maximal et minimal d'une même pastille.

Le chargement est facilité s'il y a des chanfreins à la périphérie des faces d'extrémité. Enfin, il est apparu que le passage d'une pastille ayant une hauteur très supérieure à son diamètre à une pastille de hauteur proche de la moitié du diamètre ne se traduisait pas par une fragilisation rédhibitoire.

De façon générale, il apparaît que l'emploi de pastilles courtes avec le jeu maximal indiqué plus haut réduit l'interaction pastille-gaine, ou IPG, notamment du fait d'une diminution instantanée de la dilatation des pastilles lors de transitoires de puissance (réduction de la déformation en diabolo) même pour des transitoires à vitesse très rapide. La différence de géométrie entre le plan médian et le plan interpastilles étant réduite , il en découle une diminution de la déformation radiale de la gaine, soit une réduction des contraintes et des conséquences de l'IPG. De ce fait, on obtient un crayon avec des marges accrues en manoeuvrabilité. L'effet ne dépend au premier ordre que de la variation de température du combustible lors du transitoire (induit par la variation de puissance) et non de la température moyenne des pastilles pendant le transitoire.

Dans un mode avantageux de réalisation, les pastilles contiennent un additif constitué par un oxyde métallique activant la croissance cristalline et augmentant la viscoplasticité en favorisant le fluage à haute température et la rétention des gaz de fission. De telles pastilles sont utilisables quel que soit le rapport H/D, et notamment s'il est compris entre 0,5 et 1,6.

Parmi les additifs utilisables, on peut notamment citer Cr₂O₃, SiO₂, Nb₂O₅ et Al₂O₃, isolément ou en combinaison.

SiO₂, à une teneur de 100 à 300 ppm, améliore le fluage par formation d'une phase visqueuse qui facilite le glissement aux joints de grains, mais SiO₂ n'a pas d'effet favorable sur la taille des grains, que l'on cherche à augmenter pour ralentir le relâchement de gaz de fission. De plus, utilisé seule, elle fragilise les pastilles. Associée à une teneur de 1200 à 2000 ppm de Cr₂O₃, SiO₂, à une teneur allant jusqu'à 200 ppm, a un effet favorable.

Al₂O₃ ne peut être utilisée qu'à une teneur faible, de l'ordre de 75 ppm, correspondant à sa limite de solubilité dans UO₂ à la température de frittage. Elle a alors un effet favorable sur la vitesse de fluage. Mais la nécessité d'un contrôle précis de la teneur complique la fabrication. Al₂O₃ à une teneur jusqu'à 100 ppm peut être ajouté à une teneur de 1200 à 2000 ppm de Cr₂O₃.

Les études effectuées ont montré que l'introduction de Cr₂O₃ dans la poudre d'UO₂, (éventuellement comprenant une fraction de PuO₂), à une teneur initiale conduisant à une teneur comprise entre 1250 et 2000 ppm dans les pastilles frittées, présente un intérêt tout particulier pour l'augmentation du fluage aux températures et niveaux de contrainte rencontrés en fonctionnement dans les crayons de combustible et accroît la viscoplasticité du produit fritté, donc réduit la poussée des pastilles sur la gaine lors des transitoires de puissance.

L'addition de certains oxydes ou certains métaux permet d'obtenir un grossissement des grains.

En particulier, Cr₂O₃ provoque, pour les teneurs supérieures à 750 ppm, une augmentation de la taille des grains. Au-delà de 1500 ppm, la taille des grains augmente de façon quasi exponentielle. La teneur finale sera choisie entre 1200 et 2000 ppm. Il sera avantageux d'adopter une teneur finale de 1600 ± 150 ppm car en deçà, le grossissement des grains est limité et, au-delà de 1750 ppm de teneur initiale, il se produit une forte évaporation du dopant dans le four de frittage et il n'y a pas de gain appréciable sur le comportement en fluage.

Dans la pratique, on utilisera une teneur d'environ 1600 ppm, qui est favorable à la fois à l'amélioration du fluage et à l'accroissement de la taille des grains.

Pour obtenir des caractéristiques optimales lorsque les pastilles contiennent un additif dopant, et notamment Cr₂O₃, il est souhaitable d'effectuer le frittage dans des conditions ne risquant pas de ramener Cr₂O₃ à l'état métallique, en dépit du fait que les fours de frittage habituels n'admettent pas une atmosphère oxydante. Dans la pratique, un traitement des pastilles à vert comportera généralement un pré-frittage à une température en atmosphère d'hydrogène sec ou comportant une très faible fraction de vapeur d'eau et un frittage à une température maximale comprise entre 1700 et 1750°C, en atmosphère d'hydrogène ayant de 1,9 à 2,5 % en volume de vapeur d'eau, dans la zone de frittage, ce qui peut conduire jusqu'à environ 3 % de vapeur d'eau à l'entrée du four continu de frittage.

Dans un mode de réalisation, la pastille frittée présente une forme sensiblement cylindrique avec des évidements et des chanfreins. Toutefois, on peut adopter une forme en tonneau donnant à la pastille un diamètre, dans son plan médian, supérieur de quelques dizaines de microns au diamètre des faces terminales, pour contrebalancer la déformation en diabolo. Une forme très légèrement conique peut également être utilisée lorsqu'il y a des variations de densité le long de la pastille.

Les faces terminales comportent avantageusement des évidements, en forme de calotte sphérique et/ou des chanfreins.

Les caractéristiques ci-dessus, ainsi que d'autres, apparaîtront mieux à la lecture de la description qui suit de modes particuliers de réalisation, donnés à titre d'exemples non limitatifs. La description se réfère aux dessins qui l'accompagnent, dans lesquels :
- la figure 1, où l'échelle n'est pas respectée pour plus de clarté, est une vue en coupe montrant les paramètres dimensionnels d'une pastille de combustible nucléaire et d'une gaine ;
- la figure 2 est une vue schématique en coupe d'un tronçon de crayon;
- la figure 3 montre la variation de la contrainte de Tresca en fonction du rapport H/D pour des pastilles avec le même évidement dans une gaine chargée en pastilles de type courant et en pastilles rectifiées suivant l'invention ;
- la figure 4 montre un profil type de variation de température dans un four à défilement ;
- la figure 5 montre un profil type d'humidité en fonction de la température, à respecter dans un four.

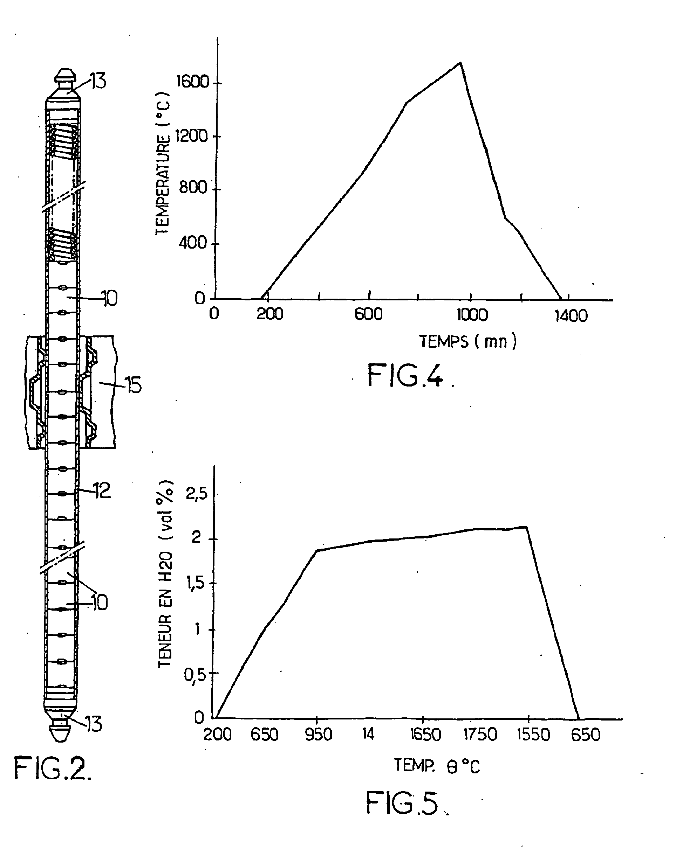

Les pastilles 10 qui ont fait l'objet des études étaient constituées d'oxyde d'uranium faiblement enrichi ; elles étaient destinées à être introduites dans des gaines 12 en alliage à base de zirconium, ayant une épaisseur de 0,57 mm et un diamètre interne nominal de 8,36 mm; on a notamment utilisé des gaines 12 du genre montré en figure 2, fermées par des bouchons 13 présentant chacun un embout à extrémité tronconique et une gorge de préhension. Dans un assemblage combustible des crayons ainsi constitués sont généralement maintenus par des grilles 15 appartenant au squelette et munies de bossettes et/ou de ressorts de maintien du crayon. Un fragment d'une telle grille est représenté schématiquement sur la figure 2.

La comparaison qui sera faite ultérieurement correspond au cas de pastilles rectifiées. Toutes les pastilles avaient un diamètre D moyen de 8,192 mm. Il est rappelé que les pastilles standard ont un rapport H/D = 1,64. Les irrégularités de diamètre (en dessous de 30 µm) observées sur des pastilles non rectifiées n'ont pas d'influence notable sur l'intérêt du concept de pastille très courte.

Les deux dernières valeurs n'ont été prises en compte que pour les pastilles suivant l'invention ayant une valeur H/D = 0,5. Pour les pastilles standard, seule la valeur habituelle a été retenue.

La plupart des pastilles ont été compressées et frittées, puis rectifiées dans des conditions leur donnant une forme cylindrique ; il est également possible d'utiliser le procédé décrit dans la demande de brevet français N° EN 00 15 507 pour "Procédé de fabrication de pastilles de combustible nucléaire oxyde", à laquelle on pourra se reporter.

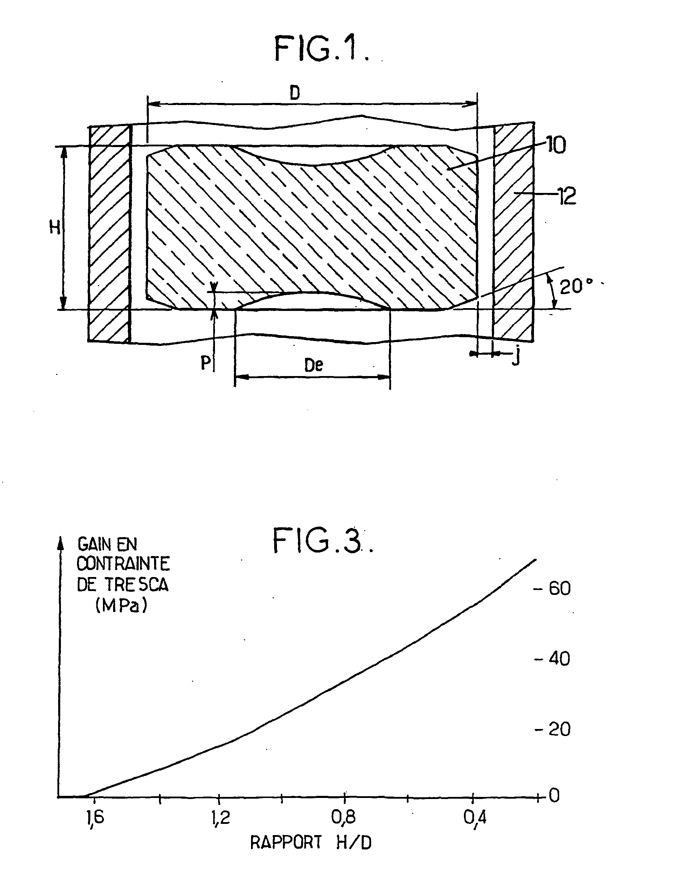

Une comparaison a été effectuée entre les contraintes circonférentielles et radiales, calculées par simulation, dans la zone de la gaine qui est généralement critique, c'est-à-dire dans le plan interne de la gaine, dans le plan inter-pastille. Une série d'essais a conduit à la courbe donnée en figure 3. Cette courbe représente le gain sur la contrainte de Tresca en fonction du rapport H/D pour une puissance dissipée de 424 W par centimètre de longueur de crayon, par comparaison avec des pastilles cylindriques de type courant, ayant un rapport H/D =1,64, ayant toutes le même évidement de 0,32 mm.

On constate que le gain en contrainte peut être voisin de 50 MPa pour H/D = 0,5 ce qui permet d'augmenter la puissance admissible en transitoire sans pour autant atteindre la valeur, comprise entre 460 et 495 MPa, que l'on considère généralement comme une limite de contrainte à ne pas dépasser dans la gaine. On peut ainsi améliorer la souplesse d'exploitation des réacteurs commerciaux et répondre rapidement à toute demande d'électricité instantanée du réseau.

En résumé, et bien que la contrainte circonférentielle continue à diminuer au-dessous d'une valeur H/D de 0,5, cette valeur de 0,5 semble être proche de l'optimum, si l'on tient compte d'autres paramètres, tels que la fragilité des pastilles et le risque de fractionnement.

Une forme en diabolo a elle aussi été étudiée. Il a été constaté qu'elle n'a pas d'influence notable. La présence d'une fraction cylindrique aux extrémités permet de réduire l'angle d'appui contre la gaine. Sur des pastilles ayant un rapport H/D = 0,5, pour la même profondeur d'évidement, une différence d'environ 20 µm entre le rayon des faces d'extrémités et le rayon minimum ne doit pas être dépassée en général.

Les variabilités de diamètre observées (< 30 µm) sur des pastilles non rectifiées n'ont pas d'influence notable sur l'intérêt de ce concept de pastilles,

De l'ensemble des résultats obtenus, on peut tirer les conclusions suivantes.

La diminution du rapport H/D apporte un gain notable du point de vue des contraintes, par suite de divers phénomènes et notamment du fait que cette diminution réduit la déformation géométrique en diabolo provoquée par la différence de température entre le centre de la pastille et sa périphérie. Une valeur H/D = 0,5 représente, pour des pastilles de dioxyde d'uranium ayant un diamètre proche de la valeur habituelle de 8,192 mm, un compromis satisfaisant entre la réduction des contraintes, les possibilités de fabrication et la fragilisation ; elle permet souvent, du fait de la réduction des contraintes, d'utiliser des pastilles non rectifiées, donc plus économiques.

La profondeur p des évidements sera en général comprise entre 0,013 H et 0,052 H. Il est possible de conserver la valeur p = 0,32mm couramment utilisée à l'heure actuelle pour D = 8,192 mm.

Comme on l'a indiqué plus haut, la présence d'additifs dopants, et notamment d'oxyde de chrome Cr₂O₃, dans les pastilles à vert, combinée à un mode de frittage favorisant un grossissement des grains, permet d'augmenter le fluage des pastilles frittées et la plasticité et donc de diminuer l'IPG.

Pratiquement, l'influence de Cr₂O₃ sur le comportement en fluage et la croissance de la taille des grains de UO₂ au cours du frittage met en oeuvre différents mécanismes qu'il a fallu identifier pour arriver à un résultat optimum.
- Le comportement en fluage, étudié à des températures allant de 1400°C à 1600°C sous des contraintes allant de 30 à 60 MPa a montré une forte incidence de la forme de Cr₂O₃ dans la matrice d'UO₂ et de la taille des gains, avec dans tous les cas un gain qui peut aller jusqu'à un facteur 10, et en général un gain en fluage qui est optimum pour les valeurs voisines de 1500 ppm lorsque Cr₂O₃ est utilisé seul.
- Le grossissement des grains relève, pour des teneurs jusqu'à 1500 ppm, d'une solubilisation quasi complète de Cr₂O₃ dans UO₂, et d'une activation de la croissance cristalline correspondant à une augmentation du coefficient de diffusion de U⁴⁺ dans l'UO₂ permettant d'arriver à une taille de grains d'environ 40 µm pour des conditions optimales de frittage, avec une température maximale d'environ 1750°C. Pour des teneurs supérieures, l'augmentation de la mobilité des joints de grains, par accroissement de la quantité de Cr₂O₃ intergranulaire, donne une évolution rapide de la taille des grains conduisant à une taille supérieure à 40 µm.

La recherche d'un optimum de concentration du point de vue de la taille des grains et des capacités de rétention des gaz de fission doit tenir compte cependant de la technologie des fours de frittage industriels et du fait que l'optimum n'est pas forcément le même que celui relatif au fluage. A l'heure actuelle, les fours utilisent des atmosphères réductrices, car ils comportent des éléments oxydables. De ce fait, on effectuera le frittage en atmosphère d'hydrogène, mais associé à de la vapeur d'eau pour augmenter le potentiel d'oxygène de l'atmosphère et favoriser l'action du dopant. Une teneur de 5 % maximale en volume de vapeur d'eau, admissible dans les fours, permet d'obtenir à un potentiel d'oxygène d'environ
- 500 kJ/mol à froid, qui peut arriver à - 350 kJ/mol à 2000°C.

Une comparaison avec le potentiel d'oxygène correspondant à l'équilibre Cr/Cr₂O₃ fait apparaître que Cr₂O₃ est réductible en chrome dès 1000°C sous une atmosphère d'hydrogène à 0,005 % de vapeur d'eau, mais seulement à partir de 1500°C sous une atmosphère d'hydrogène et à partir de 1 % de vapeur d'eau, et que Cr₂O₃ est stabilisé à 1700°C-1750°C au-delà de 2,5 % de vapeur d'eau.

Par ailleurs, au-delà de 1750 ppm de Cr₂O₃ dans les pastilles à vert, il se produit au cours du frittage une forte évaporation qui fait qu'il est difficile de dépasser une teneur globale finale de 1800 ppm dans la pastille frittée.

Le frittage, pour être satisfaisant, exige d'attendre localement (dans un four à défilement) 1750°C environ. Comme indiqué plus haut, l'atmosphère, qui varie forcément le long du four, ne doit pas réduire Cr₂O₃ à l'état de métal qui n'a pas d'effet bénéfique.

Dans un four comportant cinq zones de chauffe successives, il a été constaté que le cycle de frittage montré en figure 4 donnait de bons résultats.

Les deux premières sont destinées au pré-frittage et à l'élimination des adjuvants (notamment organiques) ajoutés à la poudre d'UO₂ pour améliorer les caractéristiques du produit final (solidité, aspect, structure). La montée en température de 1500°C à 1750°C est ralentie (par exemple environ 80°C/h) pour favoriser la croissance des grains.

Le gaz humidifié n'étant habituellement introduit dans le four que dans la zone de frittage, la composition de l'atmosphère varie le long du four. Un profil de variation de l'humidité du type montré en figure 5 donne de bons résultats pendant le frittage proprement dit, le taux d'humidification de l'atmosphère est en moyenne de 1,9 vol. % H₂O.

Des essais ont également été effectués avec des concentrations en dopants accrues ou avec une combinaison de dopants, ajoutant SiO₂ et/ou Al₂O₃ à Cr₂O₃, notamment :
2000 ppm Cr₂O₃
2000 ppm Cr₂O₃ + 50 à 200 ppm SiO₂
2000 ppm Cr₂O₂ + 100 ppm SiO₂ + jusqu'à 100 ppm Al₂O₃
1000 ppm Cr₂O₃ + 50 à 200 ppm SiO₂
1800 ppm Cr₂O₃ + 50 à 200 ppm SiO₂
1500 ppm Cr₂O₃ + 100 ppm SiO₂

Ces essais ont confirmé qu'une teneur de Cr₂O₃ dépassant 1750 ppm n'apportait pas d'avantages suffisants pour compenser les difficultés liées à l'évaporation et que Si₂O₃ et Al₂O₃ à très faible teneur permettaient de compléter l'action de Cr₂O₃.

De façon générale, le dopage des pastilles permet d'envisager le fluage de la matière vers les évidements, d'autant plus que l'on se situe dans des situations de transitoires à très fortes puissances et pour les contraintes les plus élevées. Ce fluage, permet également de diminuer la poussée de la pastille sur la gaine aux plans inter-pastilles donc réduit les contraintes dans la gaine et donne plus de marges par rapport aux contraintes IPG. Globalement, les pastilles constituent un remède contre l'IPG et permettent donc de couvrir un vaste domaine de situations. Le dopage en particulier avec 0,16% en masse de Cr2O3, confère une microstructure à gros grains propice à une meilleure rétention des gaz de fission, ce qui permet une plus grande souplesse dans le dimensionnement d'un crayon de combustible pour des gestions à forts taux.

## Revendications

1. Pastille (10) frittée de combustible nucléaire oxyde, la pastille étant sensiblement cylindrique et à base d'oxyde d'uranium enrichi, **caractérisée en ce qu'**elle comporte entre 1200 ppm et 1750 ppm en masse de Cr₂O₃, qui n'a pas été réduit lors du frittage de la pastille.

2. Pastille selon la revendication 1, la pastille ayant des grains d'une taille supérieure à 40 µm.

3. Pastille selon la revendication 1 ou 2, la pastille comportant plus de 1250 ppm en masse de Cr₂O₃.

4. Pastille selon la revendication 3, la pastille comportant plus de 1450 ppm en masse de Cr₂O₃.

5. Pastille selon la revendication 4, la pastille comportant plus de 1500 ppm en masse de Cr₂O₃.

6. Crayon de combustible nucléaire comprenant une gaine (12) en alliage à base de zirconium et un empilement de pastilles (10) frittées de combustible nucléaire oxyde, les pastilles étant sensiblement cylindriques et à base d'oxyde d'uranium enrichi, **caractérisé en ce que** les pastilles sont des pastilles selon l'une des revendications précédentes.

7. Procédé de réalisation de pastilles selon l'une des revendications 1 à 6, le procédé comprenant une étape de frittage des pastilles pendant laquelle le Cr₂O₃ n'est pas réduit, les pastilles frittées comportant entre 1200 ppm et 1750 ppm en masse de Cr₂O₃.

8. Procédé selon la revendication 7, dans lequel les pastilles frittées ont des grains d'une taille supérieure à 40 µm.

9. Procédé selon la revendication 7 ou 8, dans lequel les pastilles frittées comportent plus de 1250 ppm en masse de Cr₂O₃.

10. Procédé selon la revendication 9, dans lequel les pastilles frittées comportent plus de 1450 ppm en masse de Cr₂O₃.

11. Procédé selon la revendication 8, dans lequel les pastilles frittées comportent plus de 1500 ppm en masse de Cr₂O₃.

12. Procédé selon l'une des revendications 7 à 11, dans lequel l'étape de frittage est effectuée à une température supérieure à 1700°C.

13. Procédé selon l'une des revendications 7 à 12, dans lequel l'étape de frittage est réalisée à une température inférieure à 1750°C.

14. Procédé selon l'une des revendications 7 à 13, dans lequel l'étape de frittage est réalisée dans une atmosphère d'hydrogène contenant de la vapeur d'eau avec une teneur maximale en volume de 5% de vapeur d'eau.

15. Procédé selon la revendications 14, dans lequel l'étape de frittage est effectuée dans une atmosphère d'hydrogène ayant de 1,9 à 2,5% en volume de vapeur d'eau.

## Claims

1. Sintered pellet (10) of oxide nuclear fuel, the pellet being substantially cylindrical and based on enriched uranium oxide, **characterised in that** it comprises between 1200 ppm and 1750 ppm by mass of Cr₂O₃ which has not been reduced during the sintering of the pellet.

2. Pellet according to claim 1, the pellet having grains larger than 40 µm in size.

3. Pellet according to claim 1 or 2, the pellet containing more than 1250 ppm by mass of Cr₂O_{3.}

4. Pellet according to claim 3, the pellet containing more than 1450 ppm by mass of Cr₂O₃.

5. Pellet according to claim 4, the pellet containing more than 1500 ppm by mass of Cr₂O₃.

6. Nuclear fuel rod comprising a cladding (12) of zirconium-based alloy and a stack of sintered pellets (10) of nuclear oxide fuel, the pellets being substantially cylindrical and based on enriched uranium oxide, **characterised in that** the pellets are pellets according to one of the preceding claims.

7. Process for producing pellets according to one of claims 1 to 6, the process comprising a step of sintering the pellets during which the Cr₂O₃ is not reduced, the sintered pellets containing between 1200 ppm and 1750 ppm by mass of Cr₂O₃.

8. Process according to claim 7, wherein the sintered pellets have grains larger than 40 µm in size.

9. Process according to claim 7 or 8, wherein the sintered pellets contain more than 1250 ppm by mass of Cr₂O₃.

10. Process according to claim 9, wherein the sintered pellets contain more than 1450 ppm by mass of Cr₂O₃.

11. Process according to claim 8, wherein the sintered pellets contain more than 1500 ppm by mass of Cr₂O₃.

12. Process according to one of claims 7 to 11, wherein the sintering step is carried out at a temperature above 1700°C.

13. Process according to one of claims 7 to 12, wherein the sintering step is carried out at a temperature below 1750°C.

14. Process according to one of claims 7 to 13, wherein the sintering step is carried out in a hydrogen atmosphere containing water vapour with a maximum content by volume of 5% water vapour.

15. Process according to claim 14, wherein the sintering step is carried out in a hydrogen atmosphere having 1.9% to 2.5% by volume of water vapour.

## Patentansprüche

1. Gesinterte Tablette (10) aus Oxid-Kernbrennstoff, wobei die Tablette im Wesentlichen zylinderförmig und auf Basis von angereichertem Uranoxid ist, **dadurch gekennzeichnet, dass** sie zwischen 1200 und 1750 Massen-ppm Cr₂O₃ aufweist, das während des Sinterns der Tablette nicht reduziert wurde.

2. Tablette gemäß Anspruch 1, wobei die Tablette Körner von einer Größe von mehr als 40 µm aufweist.

3. Tablette gemäß Anspruch 1 oder 2, wobei die Tablette mehr als 1250 Massen-ppm Cr₂O₃ aufweist.

4. Tablette gemäß Anspruch 3, wobei die Tablette mehr als 1450 Massen-ppm Cr₂O₃ aufweist.

5. Tablette gemäß Anspruch 4, wobei die Tablette mehr als 1500 Massen-ppm Cr₂O₃ aufweist.

6. Kernbrennstab, der eine Hülle (12) aus einer Legierung auf Basis von Zirkonium und einen Stapel von gesinterten Tabletten (10) aus Oxid-Kernbrennstoff aufweist, wobei die Tabletten im Wesentlichen zylinderförmig und auf Basis von angereichertem Uranoxid sind, **dadurch gekennzeichnet, dass** die Tabletten Tabletten gemäß einem der vorhergehenden Ansprüche sind.

7. Verfahren zur Realisierung von Tabletten gemäß einem der Ansprüche 1 bis 6, wobei das Verfahren einen Schritt des Sinterns der Tabletten aufweist, währenddessen das Cr₂O₃ nicht reduziert wird, wobei die gesinterten Tabletten zwischen 1200 und 1750 Massen-ppm Cr₂O₃ aufweisen.

8. Verfahren gemäß Anspruch 7, wobei die gesinterten Tabletten Körner von einer Größe von mehr als 40 µm aufweisen.

9. Verfahren gemäß Anspruch 7 oder 8, wobei die gesinterten Tabletten mehr als 1250 Massen-ppm Cr₂O₃ aufweisen.

10. Verfahren gemäß Anspruch 9, wobei die gesinterten Tabletten mehr als 1450 Massen-ppm Cr₂O₃ aufweisen.

11. Verfahren gemäß Anspruch 8, wobei die gesinterten Tabletten mehr als 1500 Massen-ppm Cr₂O₃ aufweisen.

12. Verfahren gemäß einem der Ansprüche 7 bis 11, wobei der Schritt des Sinterns bei einer Temperatur von mehr als 1700°C durchgeführt wird.

13. Verfahren gemäß einem der Ansprüche 7 bis 12, wobei der Schritt des Sinterns bei einer Temperatur von weniger als 1750°C durchgeführt wird.

14. Verfahren gemäß einem der Ansprüche 7 bis 13, wobei der Schritt des Sinterns in einer Wasserstoffatmosphäre realisiert wird, die Wasserdampf mit einem maximalen Volumengehalt von 5% Wasserdampf enthält.

15. Verfahren gemäß Anspruch 14, wobei der Schritt des Sinterns in einer Wasserstoffatmosphäre mit 1,9 bis 2,5 Volumenprozent Wasserdampf durchgeführt wird.
